# EUROPEAN PATENT APPLICATION

(11) **EP 4 056 254 A1**
(43) Date of publication of application: **14.09.2022**
(21) Application number: 21162024.0
(22) Date of filing: 11.03.2021
(51) Int. Cl.: B01D 35/30, B01D 36/00, C02F 1/00

(54) **FILTER CARTRIDGE**

(71) Applicant: Brita GmbH, 65232 Taunusstein (DE)
(72) Inventor: BUNNEMANN, Phillip, 65599 Dornburg (DE)

(57) **Abstract**

A filter cartridge (1) for use within a filter device for filtering liquids comprises a cap (8) which is displaceably mounted on a housing (2) between an activation position, in which the cap (8) forms a activation compartment (10) being fluidly connected to an activation port (19) of the housing (2), and a use position with a reduced volume of the activation compartment (10). The cap (8) comprises an activation opening (11) and an use opening (20). In the activation position the activation compartment (10) inside the cap (8) can be filled with a liquid through the activation opening (11) of the cap (8). The displacement of the cap (8) closes the activation opening (11) of the cap (8) and reduces the volume of the activation compartment (10) to force at least a portion of the fluid from the activation compartment (10) through the activation port (19) into the housing (2) and then through a filter medium (3) until the cap (8) is in the use position and is in contact with the housing (2) such that the use opening (19) of the cap (8) overlaps the inlet port (5) of the housing (2) and allows fluid to pass through the inlet port (5) into the housing (2) .

## Description

### Technical Field

The invention relates to a filter cartridge for use within a filter device for filtering liquids, whereby the filter cartridge comprises a housing and a filter medium arranged within the housing, and whereby the housing comprises an inlet port and an outlet port such that a fluid flow of the liquid can pass through the inlet port into the housing and then through the filter medium within the housing before the fluid flow exits the housing through the outlet port.

### Background of the invention

Many filter devices for liquids comprise at least one filter cartridge through which the liquid to be filtered can flow through and being filtered in the process. Thus, a filter medium is arranged within a housing of the filter cartridge. The housing has an inlet port and an outlet port, and the filter medium is arranged within the housing in such a manner that a liquid that enters the housing through the inlet port must contact or traverse the filter medium before exiting the housing through the outlet port. Some filter cartridges comprise more than one filter medium that is arranged within the housing and allows for performing different filter processes during one pass of the liquid. Filter cartridges that are used for filtering drinkable water usually comprise one or more filter media like e.g. active carbon or a ion exchange material to remove unwanted contamination of the water as well as to affect the taste, the odor and the water hardness.

Many filter media within the filter cartridge are depleted during the use of the filter cartridge for filtering an increasing amount of a liquid. After having filtered a quantity of liquid, the filter cartridge is exhausted and needs to be removed and replaced by a new filter cartridge. Thus, the filter cartridge is usually removably mounted within the filter system.

Many filter cartridges comprise a filter medium that requires some venting or flushing of the filter medium with water or another liquid before the filter cartridge can be used with full efficiency. In particular a hollow fiber filter material requires thorough venting in order to remove any residual air between or within the hollow fibers. For practical reasons it is known to make some liquid, usually water, flow through the housing before the actual use of the filter cartridge begins. If the amount of liquid that is used for venting the filter medium is large enough, most or all of the air will be flushed out, resulting in an improved filter efficiency during subsequent use for filtering a liquid that flows through the housing.

If the flow of liquid through the filter device is caused by gravitational force, it takes some time for a preset quantity of liquid to flow through the housing. Even though this duration usually does not affect the daily use of such a filter device, a long duration is inconvenient for preparing the filter cartridge at the beginning of the use and service life of the filter cartridge. Usually a user inserts the filter cartridge into the filter device and waits for the preset quantity of liquid to flow through the filter cartridge in order to remove the amount of liquid that was used for a first venting of the filter cartridge, before the actual use of the filter device for filtering a liquid can begin.

WO 2010/091467 A1 discloses a filter device with a filter cartridge and a pump, whereby the pump can be manually operated in order to force a fluid to flow through the filter cartridge and being filtered. Also US 8 343 347 B2 discloses a portable filtration device with a filter cartridge and a pump for manually operating the filtration device in an outdoor environment. However, such filter devices require a manual operation during a filter process and cannot make use of gravitational forces, even though for most applications with the exception of the flushing during first activation of the filter cartridge a short duration is not required. Usually a user does not want to have to manually operate a pump of the filter device in order to filter some amount of liquid.

Accordingly, there is a need for a filter cartridge that allows for a simple and quick venting before actual use of the filter cartridge for filtering a liquid, but that does not require manual operation of the filter device for each filtering process during the use and service life of the filter cartridge.

### Summary of the invention

The present invention relates to a filter cartridge as described above, whereby the filter cartridge comprises a cap which is displaceably mounted on the housing between an activation position, in which the cap forms a activation compartment being fluidly connected to an activation port of the housing, and a use position with a reduced volume of the activation compartment, whereby the cap comprises an activation opening and an use opening, and wherein the cap is displaceable from the activation position into the use position such that in the activation position the activation compartment inside the cap can be filled with a liquid through the activation opening of the cap, and wherein the displacement of the cap closes the activation opening of the cap and reduces the volume of the activation compartment to force at least a portion of the fluid from the activation compartment through the activation port into the housing and then through the filter medium until the cap in the use position is in contact with the housing such that the use opening of the cap overlaps the inlet port of the housing and allows fluid to pass through the inlet port into the housing. In order to vent a filter cartridge before using the filter cartridge for filtering a liquid, the cap can be moved or arranged into the activation position where it forms the activation compartment that is limited by the cap and a part of the housing that faces the cap. The activation compartment can be filled with a liquid through the activation opening of the cap. Afterwards, the cap can be displaced into a use position, in which the volume of the activation compartment is smaller than with the cap in the activation position, resulting in forcing the liquid to flow out of the activation compartment by any opening of the activation compartment that is available for dispensing liquid from the activation compartment. By closing the activation opening of the cap, the liquid must exit the activation compartment through the activation port into the housing and then through the housing until being dispensed through the outlet port of the housing. This results in a very quick venting of the filter medium that is arranged inside of the housing. This process of venting the filter cartridge can be performed repeatedly if necessary or deemed advantageous for improving the filter efficiency during subsequent use of the filter device. In order to repeat the activation process, the cap can be displaced into the activation position and the activation compartment formed by the cap can be filled again with a liquid. Afterwards the cap can be displaced into the use position, thereby reducing the volume of the activation compartment and forcing the excess liquid to flow out of the activation compartment that becomes smaller and smaller and to flow through the activation port into the housing.

After completion of such an activation procedure that results in sufficient venting of the filter cartridge, the cap remains in the use position. In the use position the use opening of the cap overlaps with the inlet port of the housing and allows for unrestricted use of the filter cartridge during subsequent use for filtering a liquid that flows into the inlet port, through the housing and out of the outlet port. No further displacement of the cap is required during the service life of the filter cartridge. There is no need to remove the cap or to continually operate or displace the cap for performing a filter process.

Furthermore, the cap remains mounted onto the housing of the filter cartridge. Thus, the cap is available during the full duration of the service life of the filter cartridge to perform the activation process again. There is no risk of loosing or misplacing the cap that enables the accelerating of the venting process of the filter cartridge.

According to an advantageous aspect of the invention the filter cartridge comprises a positive guide for guiding the displacement of the cap with respect to the housing. The positive guide defines a motion sequence for the displacement of the cap between the activation position and the use position and prevents a user from displacing the cap in a manner that does not result in an accelerated venting of the filter cartridge. The positive guide can define the direction of movement during the displacement in order to facilitate the manual operation of the cap during the venting process. Furthermore, the positive guide can also be designed to prevent an unintentional detachment of the cap from the housing of the filter cartridge.

In yet another aspect of the invention, the filter cartridge comprises a positive retention that holds the cap within the use position. The positive retention can be provided by a latching tongue that engages in a recess. The positive retention can also be provided by a spring-loaded latching element like e.g. a pin or a bolt that engages with a corresponding recess or hole. Such a positive retention avoids unintentional displacement of the cap during the use of the filter cartridge that might result in an obstruction of use or reduction of effectiveness of the filter cartridge.

According to an advantageous embodiment of the invention the housing has a lateral surface and a housing end face facing the cap, the cap is closed on one side and has a lateral surface that is adapted to surround the lateral surface of the housing, the cap surrounds the housing end face and a part of the lateral surface of the housing. A cross-section of the housing that is perpendicular to the lateral surface may be of circular or oval shape. The cross-section can also be of rectangular or polygonal shape. The cap can be easily displaced in an axial direction that is parallel to the lateral surface and perpendicular to the cross-section perpendicular to the lateral surface. The cap can be moved into the activation position with the closed side of the cap being the farthest away from the housing end face of the housing, or into the use position with the closed side of the cap being next to or in contact with the housing end face of the housing. The lateral surfaces of the cap and the enclosed housing provide for a positive guide that prevents any lateral movement of the cap with respect to the housing.

The lateral surface of the cap and the closed side of the cap as well as the housing end face of the housing confine and surround the activation compartment that is formed by the cap in the activation position. In case that the housing end face of the housing and the closed side of the cap are of similar shape, the cap can be moved into a use position with the closed side of the cap in close contact to the housing end face, thus reducing the volume of the activation compartment to zero in the use position.

According to an advantageous embodiment of the invention the housing has a cylindrical shape and the cap has a hollow cylindrical shape, whereby an inner diameter of the lateral surface of the cap is equal or larger than an outer diameter of the lateral surface of the housing. Such a shape of the cap and of the housing allows for a rotational movement of the cap with respect to the housing. If the inner and outer diameter of the respective lateral surfaces are matched, the lateral surfaces provide for a positive guide that allows for a displacement of the cap in an axial direction parallel to the lateral surfaces and in a circumferential direction. A rotational displacement of the cap in a circumferential direction can be used to easily align the cap for overlapping the use opening of the cap with the inlet port of the housing in the use position of the cap.

According to an aspect of the invention, the positive guide comprises a groove within the lateral surface of either the housing or the cap. A formation or cam protruding above the other lateral surface can engage with the groove such that the course of the groove defines and limits the displacement of the cap with respect to the housing. Such a positive guide that is formed by a groove and a corresponding formation that engage with each other provides for a reliable guidance during displacement and can also withstand greater forces exerted on the cap during activation.

In yet another advantageous aspect of the invention, the groove comprises an activation section forcing a rotational displacement of the cap near the activation position and a venting section forcing an axial displacement of the cap towards the use position. The rotational displacement near the activation position provides for a closing of the activation opening that is positioned within the lateral surface of the cap and displaced onto a tongue shaped cover that is formed by a formation of the housing. During the rotational displacement of the cap, the volume of the activation compartment is not reduced, and the liquid that has been filled into the activation compartment is not forced outside of the activation compartment, which would result in an unwanted spilling of the liquid through the not yet closed activation opening. After the rotational displacement has been completed and the activation opening is closed by the tongue shaped cover provided by the housing, the further displacement of the cap is defined by the venting section of the groove and comprises an axial displacement that reduces the size of the activation compartment, which forces a corresponding amount of liquid to flow out of the activation compartment by passing through the inlet port and through the filter medium within the housing. At the end of the displacement, the groove may form a locking section limiting the displacement of the cap to a rotational displacement only. Thus, any pressure that is applied by a fluid that flows through the filter cartridge will generate a force that tends to push the cap away from the housing along an axial direction, which is blocked by the locking section that only allows for a rotational movement of the cap that has been position within the use position.

According to a particularly advantageous aspect of the invention, the groove within the lateral surface comprises a helix-shaped arc section that provides for a simultaneous axial and rotational displacement of the cap with respect to the housing. The use section described above can be helix-shaped. Thus, a screwing motion that is applied to the cap and the housing will result in the axial displacement that is required for venting the filter medium within the housing. Such a screwing motion is easily performed and combines both, the axial displacement with a rotational displacement, which helps to smoothen the transitions from a purely rotational displacement at the beginning and at the end of a full displacement of the cap into a predominantly axial displacement that is required for venting the filter medium.

In yet another embodiment of the invention, the activation opening is located within the lateral surface of the cap next to the closed side of the cap, the activation port of the housing is located within the housing end face facing the cap, and the outlet port of the housing is located within a housing end face opposite to the housing end face facing the cap. The activation port of the housing can be identical to the inlet port. However, according to the design of the housing and the cap, it is also possible to provide for a separate activation port that is open during the activation process, whereas the inlet port can be still covered by the cap until the cap is displaced into the use position. The arrangement of the activation port opposite to the outlet port allows for a direct flow path through the housing during the activation process which supports a complete and quick venting of the filter cartridge.

According to an advantageous embodiment of the invention, the use opening is located within the lateral surface of the cap opposite to the closed side of the cap, and the inlet port of the housing is located within the lateral surface of the housing in such a manner that the use opening of the cap that is arranged in the use position overlaps the inlet port of the housing and allows liquid to pass through the use opening and the overlapping inlet port into the housing. After the activation process, the cap is positioned in the end position and remains in the end position during the service life of the filter cartridge. In the end position, the use opening that is formed within the cap overlaps with the inlet port of the housing, which allows for the liquid to flow through the inlet port without any adverse effects or restrictions due to the cap that overlaps large parts of the housing. According to the requirements for the filter cartridge and the design of the housing, the housing may have several inlet ports, and the cap may have several use openings that overlap in a manner as to provide for a large cross-sectional area through which the liquid can enter into the housing during normal use of the filter cartridge.

In order to facilitate the handling and displacement of the cap during the activation process, the cap optionally comprises a handle for manual displacement of the cap with respect to the housing. The handle can be a single knob that protrudes from the cap. The handle can also be a grip element or a protruding loop that facilitates gripping and moving the cap.

### Brief description of the drawings

The present invention will be more fully understood, and further features will become apparent, when reference is made to the following detailed description and the accompanying drawings. The drawings are merely representative and are not intended to limit the scope of the claims. In fact, those of ordinary skill in the art may appreciate upon reading the following specification and viewing the present drawings that various modifications and variations can be made thereto without deviating from the innovative concepts of the invention. Like parts depicted in the drawings are referred to by the same reference numerals.
Figure 1 illustrates a schematic representation of a filter cartridge with a cap that is displaceably mounted on a housing of the filter cartridge and that provides for an activation compartment, whereby the cap is located in an activation position ready to activate the filter cartridge,
Figure 2 illustrates a sectional view along the lines II-II within figure 1 of the filter cartridge shown in figure 1,
Figure 3 illustrates a perspective view of the filter cartridge shown in figures 1 and 2 with the cap located in the activation position,
Figure 4 illustrates a schematic representation of the filter cartridge shown in figures 1 to 3, whereby the cap is located in a use position of the filter cartridge,
Figure 5 illustrates a sectional view along the lines V-V within figure 4 of the filter cartridge shown in figure 4, and
Figure 6 illustrates a perspective view of the filter cartridge shown in figures 4 and 5 with the cap located in the use position.

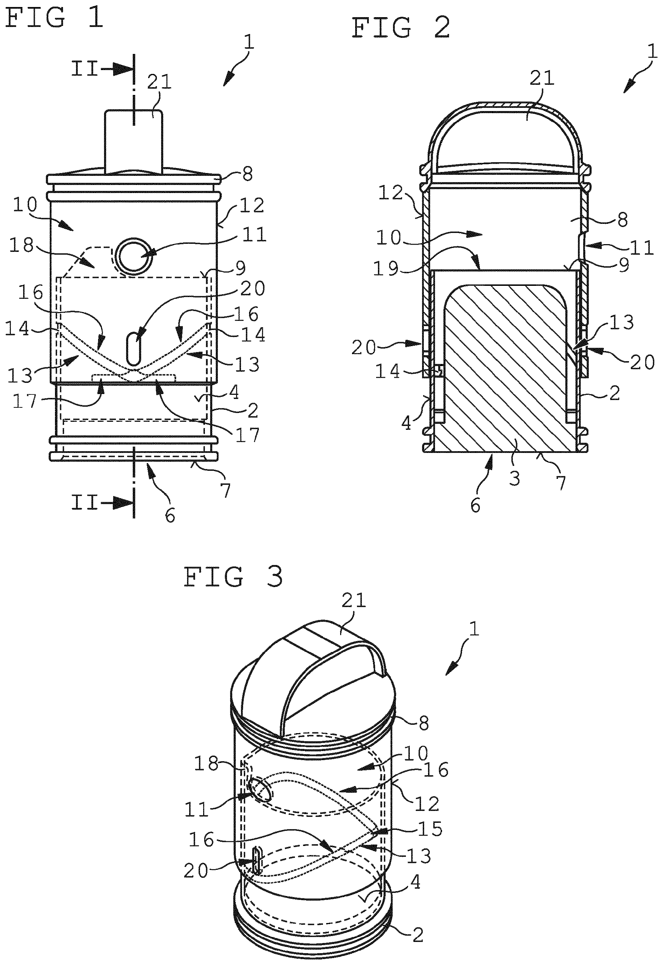

Figures 1 to 6 illustrate an exemplary embodiment of a filter cartridge 1 that comprises a housing 2 and a filter medium 3 arranged within the housing 2. The filter medium 3 comprises a hollow fiber membrane with a large number of hollow fibers that must be vented before a first use of the filter cartridge 1 in order to remove residual air from the hollow fiber membrane that reduces the efficiency of the filter cartridge 1 during use.

The housing 2 of the filter cartridge 1 has a hollow cylindrical shape with a lateral surface 4. The housing 2 comprises two inlet ports 5 that located within the lateral surface 4 at opposite parts of the housing 2. An outlet port 6 is located at a housing end face 7. The filter medium 3 is arranged inside the housing 2 in a manner that provides for a flow path for a liquid, whereby the liquid enters into the housing 2 through the inlet ports 5, runs through the filter medium 3 and exits the housing 2 through the outlet port 6.

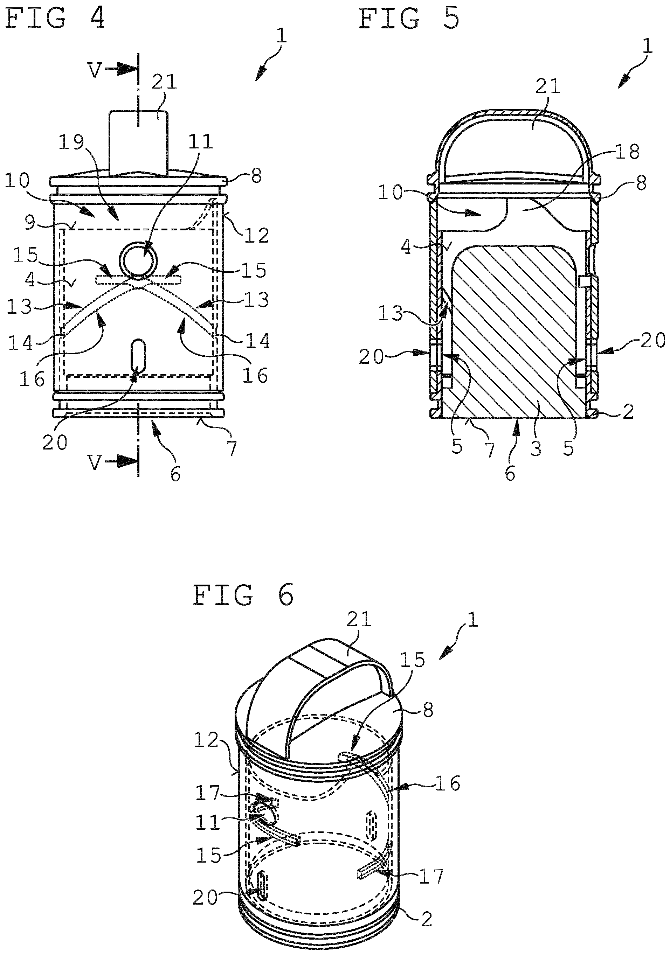

The filter cartridge 1 also comprises a cap 8 that is displaceably mounted onto the housing 2. The cap 8 has a hollow cylindrical shape and covers a housing end face 9 that faces the cap 8. However, the cap 8 can be moved between an activation position shown in figures 1 to 3 and a use position that is shown in figures 4 to 6. The cap 8 that is located in the activation position forms an activation compartment 10 that is limited by the cap 8 and the housing end face 9 of the housing 2 that faces the cap 8. The cap 8 comprises an activation opening 11 that is located within a lateral surface 12 of the cap 8 and provides access to the activation compartment 10 within the cap 8. A volume of the activation compartment 10 changes according to the displacement of the cap 8 with respect to the housing 2, in particular with respect to the displacement of the cap 8 with respect to the housing end face 9.

The housing 2 comprises two grooves 13 within the lateral surface 4 that run along the lateral surface 4 at opposite sides of the lateral surface 4. The grooves 13 and some other parts of the filter cartridge 1 that are covered by the cap 8 are illustrated with dashed lines. Each of the grooves 13 forms a positive guide for a projection 14 formed on an inner side 15 of the cap 8 and directed inwards. The course of each groove 13 is identical, but opposite to each other. Each groove 13 comprises an activation section 15 forcing a solely rotational displacement of the cap 8 near the activation position of the cap 8. Afterwards, each of the grooves 13 comprises a venting section 16 with a helix-shaped course that also forces an axial displacement of the cap 8 in direction towards the housing 2, resulting in a reduction of the volume of the activation compartment 10. Opposite to the activation section 15 each groove 13 comprises a locking section 17 forcing again a solely rotational displacement of the cap 8 near the use position of the cap 8. Thus, in the use position as well as in the activation position of the cap 8, any axial forces that are applied to the cap 8 cannot cause a displacement of the cap 8 due to the solely rotational movement that is allowed by the course of the grooves 13 at the use position and at the activation position. No additional means for locking the cap 8 in either the activation position or use position are required for proper activation and use of the filter cartridge 1.

Preferably before a first use of the filter cartridge 1, the cap 8 is manually moved into the activation position. The volume of the activation compartment 10 that is formed by the cap 8 is then filled through the activation opening 11 with a liquid. Afterwards, the cap 8 is manually displaced towards the use position. Due to the courses of the grooves 13 the cap 8 begins with a rotational displacement. The activation opening 11 is rotated and slides over a tongue shaped cover 18 that is formed by a formation of the housing 2 that projects in an axial direction from the housing end face 9 and has an outer surface that is flush with the lateral surface 4 of the housing 2. Thus, the activation opening 11 is closed by the tongue shaped cover 18 at the beginning of the displacement of the cap 8 that is forced by the course of the grooves 13.

After the closure of the activation opening 11, the cap 8 is displaced along the helix-shaped course of the venting section 16 of the grooves 13, which results in reducing the volume of the activation compartment 10 and in pressing the liquid out of the activation compartment 10 and through an activation port 19 located at the housing end face 9 that faces the cap 8 and the activation compartment 10 formed therein. Due to the manual displacement of the cap 8, the liquid is forced to flow through the housing 2 and the filter medium 3 inside of the housing 2, thereby venting the filter cartridge 1 by removing any residual air that might have remained within the filter medium 3. If need arises or deemed appropriate, this process can be repeatedly performed.

Afterwards, the cap 8 rests in the use position and the sufficiently vented filter cartridge 1 is inserted into the filter device for filtering liquids with high efficiency. In order to allow for an easy entry of liquid into the housing 2, the cap 8 comprises two use openings 20 located within the lateral surface 12 of the cap 8 in such a manner that each of the two use openings 20 is overlapping the corresponding input port 5 of the housing 2 when the cap 8 rests in the use position. Thus, the liquid that flows through the filter cartridge 1 enters the housing 2 through the inlet openings 20 and the corresponding input ports 5, flows through the filter medium 3 and exits the filter cartridge 1 through the outlet port 6 that is located opposite to the cap 8.

In order to facilitate the manually performed venting process of the filter cartridge 1, the cap 8 comprises a handle 21 formed at an outer surface of the cap 8 and projecting away from the housing 2.

## Claims

1. Filter cartridge (1) for use within a filter device for filtering liquids, whereby the filter cartridge (1) comprises a housing (2) and a filter medium (3) arranged within the housing (2), and whereby the housing (2) comprises an inlet port (5) and an outlet port (6) such that a fluid flow of the liquid can pass through the inlet port (5) into the housing (2) and then through the filter medium (3) within the housing before the fluid flow exits the housing (2) through the outlet port (6), **characterized in that** the filter cartridge (1) comprises a cap (8) which is displaceably mounted on the housing (2) between an activation position, in which the cap (8) forms a activation compartment (10) being fluidly connected to an activation port (19) of the housing (2), and a use position with a reduced volume of the activation compartment (10), whereby the cap (8) comprises an activation opening (11) and an use opening (20), and wherein the cap (8) is displaceable from the activation position into the use position such that in the activation position the activation compartment (10) inside the cap (8) can be filled with a liquid through the activation opening (11) of the cap (8), and wherein the displacement of the cap (8) closes the activation opening (11) of the cap (8) and reduces the volume of the activation compartment (10) to force at least a portion of the fluid from the activation compartment (10) through the activation port (19) into the housing (2) and then through the filter medium (3) until the cap (8) in the use position is in contact with the housing (2) such that the use opening (19) of the cap (8) overlaps the inlet port (5) of the housing (2) and allows fluid to pass through the inlet port (5) into the housing (2).

2. Filter cartridge (1) according to claim 1, **characterized in that** the filter cartridge (1) comprises a positive guide for guiding the displacement of the cap (8) with respect to the housing.

3. Filter cartridge (1) according to claim 2, **characterized in that** the filter cartridge (1) comprises a positive retention that holds the cap (8) within the use position.

4. Filter cartridge (1) according to one of the preceding claims, **characterized in that** the housing (2) has a lateral surface (4) and a housing end face (9) facing the cap (8), **in that** the cap (8) is closed on one side and has a lateral surface (12) that is adapted to surround the lateral surface (4) of the housing (2), **in that** the cap (8) surrounds the housing end face (9) and a part of the lateral surface (4) of the housing (2).

5. Filter cartridge (1) according to claim 4, **characterized in that** the housing (2) has a cylindrical shape and **in that** the cap (8) has a hollow cylindrical shape, whereby an inner diameter of the lateral surface (12) of the cap (8) is equal or larger than an outer diameter of the lateral surface (4) of the housing (2).

6. Filter cartridge (1) according to claim 2 and claim 5, **characterized in that** the positive guide comprises a groove (13) within the lateral surface (4, 12) of either the housing (2) or the cap (8).

7. Filter cartridge (1) according to claim 6, **characterized in that** the groove (13) comprises an activation section (15) forcing a rotational displacement of the cap (8) near the activation position and a venting section (16) forcing an axial displacement of the cap (8) towards the use position.

8. Filter cartridge (1) according to claim 7, **characterized in that** groove (13) within the lateral surface (4, 12) comprises a helix-shaped arc section that provides for a simultaneous axial and rotational displacement of the cap (8) with respect to the housing (2).

9. Filter cartridge (1) according to one of the preceding claims 4 to 8, **characterized in that** the activation opening (11) is located within the lateral surface (12) of the cap (8) next to the closed side of the cap (8), **in that** the activation port (19) of the housing (2) is located within the housing end face (9) facing the cap (8), and **in that** the outlet port (6) of the housing (2) is located within a housing end face opposite to the housing end face (9) facing the cap (8).

10. Filter cartridge (1) according to one of the preceding claims 4 to 9, **characterized in that** the use opening (20) is located within the lateral surface (12) of the cap (8) opposite to the closed side of the cap (8), and that the inlet port (5) of the housing (2) is located within the lateral surface (4) of the housing (2) in such a manner that the use opening (20) of the cap (8) that is arranged in the use position overlaps the inlet port (5) of the housing (2) and allows liquid to pass through the use opening (20) and the overlapping inlet port (5) into the housing (2).

11. Filter cartridge (1) according to one of the preceding claims, **characterized in that** the cap (8) comprises a handle (21) for manual displacement of the cap (8) with respect to the housing (2).
